(19) Europäisches Patentamt
European Patent Office
Office européen des brevets

(11) EP 4 778 983 A1

# (12) EUROPÄISCHE PATENTANMELDUNG

(43) Veröffentlichungstag:
**22.07.2026 Patentblatt 2026/30**

(21) Anmeldenummer: **25152867.5**

(22) Anmeldetag: **20.01.2025**

(51) Internationale Patentklassifikation (IPC):
***C09B 67/22*** $^{(2006.01)}$ ***C09B 69/10*** $^{(2006.01)}$
***C09K 9/02*** $^{(2006.01)}$

(52) Gemeinsame Patentklassifikation (CPC):
**C09B 69/10; C09B 67/0034; C09K 9/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Rodenstock GmbH**
**80687 München (DE)**

(72) Erfinder:
- **Weigand, Udo**
  **81247 München (DE)**
- **Hartl, Andreas**
  **81375 München (DE)**
- **Zinner, Herbert**
  **85296 Rohrbach (DE)**

(74) Vertreter: **Müller-Boré & Partner Patentanwälte PartG mbB**
**Friedenheimer Brücke 21**
**80639 München (DE)**

## (54) KOMBINATION HOMOLOGER PHOTOCHROMER ANNELLIERTER NAPHTHOPYRANE ZUR EINFACHEN REALISIERUNG VON ÄSTHETISCHEN GRAUEN UND BRAUNEN FARBTÖNEN IN PHOTOTROPEN POLYMEREN

(57) Die vorliegende Erfindung betrifft die Kombination zweier spezieller homologer photochromer annellierter Naphthopyran-Isomere gemäß den nachstehenden Formeln (I) und (II) und deren Einbringung in Polymere für entsprechende phototrope Produkte. Diese phototropen Polymere zeichnen sich durch sehr stabile und ästhetische Eindunklungs-Farbtöne aus. Darüber hinaus lassen sich so tief eindunkelnde und sehr schnell aufhellende phototrope Produkte realisieren.

EP 4 778 983 A1

## Beschreibung

Die vorliegende Erfindung betrifft die Kombination zweier spezieller homologer photochromer annellierter Naphthopyran-Isomere gemäß den nachstehenden Formeln (I) und (II) und deren Einbringung in Polymere für entsprechende phototrope Produkte. Diese phototropen Polymere zeichnen sich durch sehr stabile und ästhetische Eindunklungs-Farbtöne aus. Darüber hinaus lassen sich so tief eindunkelnde und sehr schnell aufhellende phototrope Produkte realisieren.

Thiourethan-Polymere sind die mit Abstand weitverbreitetsten Materialien für Kunststoff-Brillengläser mit höheren Brechungsindices von ≥ 1,60. In EP 4 240 797 wird der Einsatz einer spezifischen Kombination von zwei unterschiedlichen, photochromen annellierten Naphthopyran-Isomeren gemäß den darin angegebenen Formeln insbesondere zur Einbringung in Thiourethan-Polymere vorgesehen. Die beiden in EP 4 240 797 kombinierten Naphthopyran-Isomere weisen unterschiedliche Eindunklungs-Farbtöne auf, die sich in ihrer Kombination zu beispielsweise ästhetischen Grau- bzw. Braun-Tönen ergänzen.

Der vorliegenden Erfindung liegt die Aufgabe zugrunde, neue Systeme bereitzustellen, deren Einbringung insbesondere in Thiourethan-Polymere zu phototropen Polymeren führt, die sich durch sehr stabile und ästhetische Eindunklungs-Farbtöne auszeichnen. Die Einbringung soll dabei insbesondere auch durch Massefärbung bewerkstelligt werden können.

Diese Aufgabe wird durch die in den Ansprüchen gekennzeichneten Gegenstände gelöst.

Insbesondere wird die neuartige Kombination von zwei homologen, photochromen annellierten Naphthopyranen gemäß den nachfolgenden allgemeinen Formeln (I) und (II) bereitgestellt:

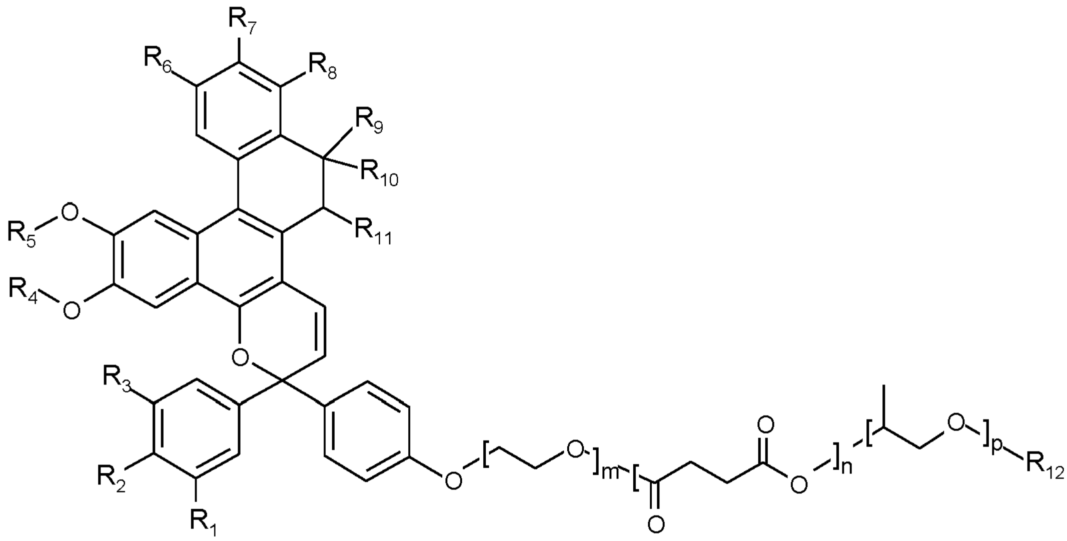

(I)

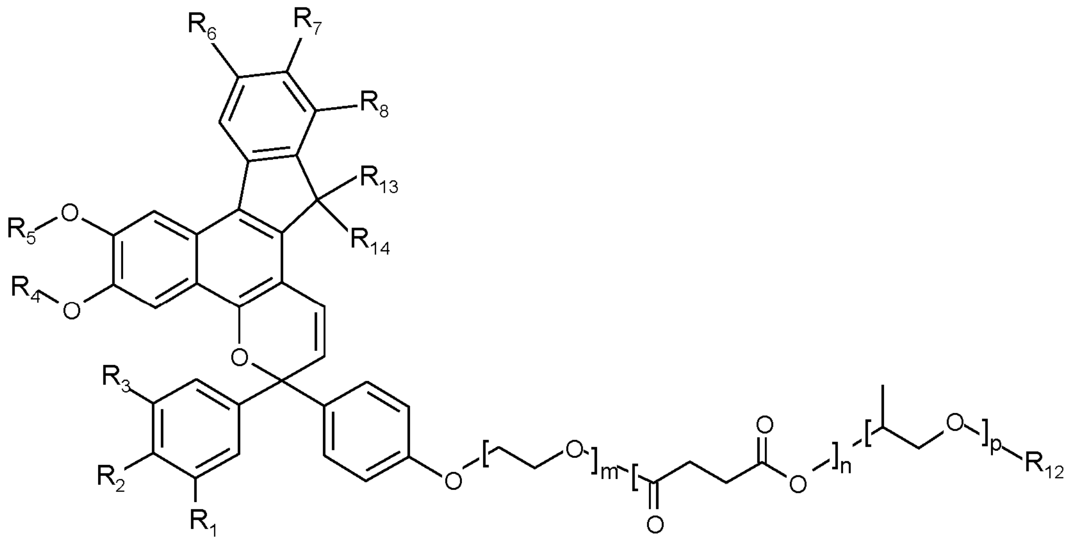

(II)

wobei in den Formeln (I) bzw. (II)

m eine ganze Zahl zwischen 0 und 1 ist,

n eine ganze Zahl zwischen 0 und 1 ist, und

p eine ganze Zahl zwischen 0 und 50 darstellt;

die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Di-($C_1$-$C_6$)-alkylamino-Rest, einem Piperidinyl-Rest, einem 3,5-Dimethylpiperidinyl-Rest, einem Indolinyl-Rest, einem Morpholinyl-Rest, einem 2,6-Dimethylmorpholinyl-Rest, einem Thiomorpholinyl-Rest, einem Azacycloheptyl-Rest, einem Phenylamino-Rest, einem ($C_1$-$C_6$)-Alkyl-phenylamino-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest;

oder die Reste $R_1$ und $R_2$ zusammen die Gruppierung $-X-(CH_2)_q-Y-$ darstellen, wobei X und Y unabhängig voneinander aus den Gruppierungen -O-, -S-, $-N(C_1-C_6)$-Alkyl, $-NC_6H_5-$, $-CH_2-$, $-C(CH_3)_2-$, $-C(C_2H_5)_2-$ oder $-C(C_6H_5)_2-$ ausgewählt sind und q eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass X oder Y, wenn diese $-CH_2-$ darstellen, zusammen mit der jeweils benachbarten $CH_2$-Gruppe auch einen annellierten Benzol-Ring darstellen können;

die Reste $R_4$ und $R_5$ jeweils unabhängig voneinander einen Substituenten darstellen, ausgewählt aus einem ($C_1$-$C_6$)-Alkyl-Rest, einem ($C_3$-$C_7$)-Cycloalkyl-Rest, einem Trifluormethyl-Rest, einem Phenyl-Rest, oder einem Benzyl-Rest;

oder die Reste $R_4$ und $R_5$ zusammen die Gruppierung $-(CH_2)_r-$ darstellen und r eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass eine der $CH_2$-Einheiten durch $-C(CH_3)_2-$, $-C(C_2H_5)_2-$ oder $-C(C_6H_5)_2-$ ersetzt sein kann;

die Reste $R_6$, $R_7$ und $R_8$ jeweils unabhängig voneinander einen Substituenten darstellen, ausgewählt aus Wasser-

stoff, einem ($C_1$-$C_6$)-Alkyl-Rest, einem ($C_3$-$C_7$)-CycloalkylRest, einem ($C_1$-$C_6$)-Alkoxy-Rest, einem Phenyl-Rest, einem 4-Methoxyphenyl-Rest, einem 3,4,5-Trimethoxyphenyl-Rest, einem 4-(Dimethylamino)phenyl-Rest, einem 4-(N-Morpholinyl)phenyl-Rest, einem 4-(Diphenylamino)phenyl-Rest, einem 4-(Trifluormethyl)phenyl-Rest, einem Phenoxy-Rest oder einem Benzyl-Rest;

oder die Reste $R_6$ und $R_7$ zusammen oder $R_7$ und $R_8$ zusammen einen annellierten Benzol-Ring bilden, der un-, mono- oder disubstituiert sein kann, wobei die Substituenten ausgewählt sein können aus Wasserstoff, einem ($C_1$-$C_6$)-Alkyl-Rest, einem ($C_1$-$C_6$)-Alkoxy-Rest, einem Phenyl-Rest oder einem Benzyl-Rest;

oder die Reste $R_6$ und $R_7$ zusammen oder $R_7$ und $R_8$ zusammen ein annelliertes Naphthalin-Ringsystem, ein annelliertes Benzofuran-Ringsystem, ein annelliertes Benzothiophen-Ringsystem, ein annelliertes 3,3-Dimethylinden-Ringsystem oder ein annelliertes 2H-Chromen-Ringsystem bilden;

die Reste $R_9$, $R_{10}$, $R_{11}$, $R_{13}$ und $R_{14}$ jeweils unabhängig voneinander einen Substituenten darstellen, ausgewählt aus einem ($C_1$-$C_6$)-Alkyl-Rest oder einem Phenyl-Rest;

der Rest $R_{12}$ einen Substituenten darstellt, ausgewählt aus einem ($C_1$-$C_6$)-Alkyl-Rest, einem Phenyl-Rest oder der Gruppierung

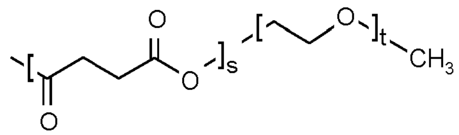

wobei s eine ganze Zahl zwischen 0 und 1 darstellt und t eine ganze Zahl zwischen 1 und 50.

Fig. 1 zeigt ein Syntheseschema zur Herstellung der erfindungsgemäß eingesetzten Verbindungen sowie die Funktionsweise deren Anregung;

Fig. 2 zeigt VIS-Absorptionsspektren der Verbindungen aus dem Stand der Technik (EP 4 240 797);

Figur 3 zeigt VIS-Absorptionsspektren erfindungsgemäßer Verbindungen (Doppelabsorptionsbanden); und

Fig. 4 zeigt eine Veranschaulichung der Eindunklungs-Farbtöne erfindungsgemäß eingesetzter Verbindungen im Vergleich zu Referenz-Verbindungen aus dem Stand der Technik.

Gemäß der vorliegenden Erfindung wird eine neue Kombination zweier spezieller photochromer annellierter Naphthopyrane und deren Einbringung in Polymere für phototrope Produkte bereitgestellt. Bei den beiden annellierten Naphthopyranen handelt es sich um homologe Systeme, d.h. das Grundgerüst unterscheidet sich um nur ein Kohlenstoffatom voneinander an einer bestimmten Molekül-Stelle (direkt neben der Naphthalin-Untereinheit). Dieser kleine Unterscheid ist unerwarteterweise ausreichend, sehr unterschiedliche Eindunklungs-Farbtöne zu erzeugen. Beide photochromen annellierten Naphthopyrane zeichnen sich dadurch aus, dass sie im eingedunkelten Zustand jeweils eine ausgeprägte Doppelabsorptionsbande im sichtbaren Wellenlängenbereich aufweisen. Als Folge davon resultieren jeweils matte (d.h. nichtbrilliante) Eindunklungs-Farbtöne, mit denen sich besonders leicht ästhetische graue und braune Mischungs-Farbtöne in phototropen Polymeren realisieren lassen, wenn die beiden annellierten Naphthopyrane in geeignetem Verhältnis miteinander kombiniert werden. Darüber hinaus sind auf diese Weise tief eindunkelnde und sehr schnell aufhellende phototrope Produkte zugänglich.

Die Synthese der erfindungsgemäßen Verbindungen gelingt aus den zugrundeliegenden annellierten Naphthopyranen mit einem 4-Hydroxy-Substituenten (d.h. m = 0) bzw. einem 4-(2-Hydroxyethoxy)-Substituenten (d.h. m = 1) am Benzol-Ring, der an das Kohlenstoffatom neben dem Pyran-Sauerstoff gebunden ist. Gemäß dem Syntheseschema in Figur 1 werden daraus die erfindungsgemäßen Verbindungen hergestellt. Die Methode ist für Formeln (I) und (II) identisch - daher ist in Figur 1 nur der Pyran-Ring mit den beiden Aryl-Substituenten dargestellt.

Im Gegensatz zum Einsatz der erfindungsgemäßen Verbindungen in Polythiourethanen ist das Anhängen einer längeren Poly(propylenoxy)-Kette in aus Acrylat-Monomeren hergestellten Polymeren nicht zwingend erforderlich, um sehr gute phototrope Eigenschaften zu erzielen - hierfür sind auch Verbindungen der Formeln (I) und (II) mit p = 0 gut brauchbar.

Zum Einsatz in Polythiourethanen ist jedoch das Anhängen einer längeren Poly(propy-lenoxy)-Kette notwendig -

dazu gibt es zwei Synthesewege: Wenn n die Zahl 0 darstellt, werden kommerziell erhältliche Polypropylenglykol-monobutylether (mit $p \geq 10$ in Formeln (I) und (II), beispielsweise $p \approx 42$ mit einem mittleren Molekulargewicht von 2500) zuerst als Tosylat (Ts) aktiviert. Die Kettenlänge weist dabei jeweils eine Gauss-Verteilung auf, d.h. es liegen Mischungen mit unterschiedlichen Kettenlängen vor, die um ein Maximum herum verteilt sind. Danach gelingt die kovalente Anbindung an die annellierten Naphthopyrane, die vorher durch Deprotonierung mit Natriumhydrid aktiviert wurden, mittels einer üblichen Williamson-Ethersynthese. Wenn n die Zahl 1 darstellt, wird zuerst mit Bernsteinsäureanhydrid umgesetzt. Nach Aktivierung der freien CarboxylGruppe der Succinyl-Einheit mit Carbonyldiimidazol (CDI) lässt sich bereits bei niedrigen Reaktionstemperaturen eine sehr milde Estersynthese mit der Hydroxy-Gruppe der Polypropylenglykol-monobutylether realisieren.

Ähnliche Verbindungen mit dem Grundgerüst von Formel (I) wurden erstmals zum Einsatz in Kunststoffen aller Art in EP 3 807 258 vorgestellt. In EP 4 240 797 wurden diese Verbindungen (vorgestellt wurden in Blau-Tönen eindunkelnde Ausführungsbeispiele) mit photochromen Verbindungen mit isomerem Grundgerüst, die in Orange-Tönen eindunkeln, kombiniert, um damit grau- und braun-eindunkelnde phototrope Produkte zu realisieren. Die erfindungsgemäßen Verbindungen der Formel (I) weisen ein im Vergleich zur Formel (I) aus EP 4 240 797 an zwei Stellen ein enger definiertes Substitutionsmuster auf. Um die gewünschten Doppelabsorptions-Eigenschaften zu erzielen, sind zwei Alkoxy-Substituenten essenziell, d.h. jeweils ein Sauerstoffatom zusammen mit den Substituenten $R_4$ und $R_5$. Die erfindungsgemäßen Verbindungen der Formel (II) weisen ein im Vergleich zu (I) um ein Kohlenstoffatom vermindertes Grundgerüst auf (es fehlt das Kohlenstoffatom mit dem Substituenten $R_{11}$), d.h. (I) und (II) sind also homologe Systeme. Analog zu (I) ist auch bei den erfindungsgemäßen Verbindungen der Formel (II) das Vorliegen von zwei Alkoxy-Substituenten an derselben Stelle im Molekül essenziell. Verbindungen der Formel (II) (d.h. m = n = p = 0) wurden erstmals in EP 1 214 311 vorgestellt.

In überraschender Weise zeichnet sich die Kombination von Verbindungen gemäß Formel (I) mit homologen Verbindungen gemäß Formel (II) dadurch aus, dass sich sehr einfach ästhetische graue und braune Eindunklungs-Farbtöne in phototropen Polymeren realisieren lassen, die sehr stabil hinsichtlich Konstanz des Farbtons bei Eindunklung und Aufhellung sowie Lebensdauer sind. Ausschlaggebend dafür ist jeweils das Vorliegen einer ausgeprägten Doppelabsorptionsbande im sichtbaren Wellenlängenbereich des elektromagnetischen Spektrums im eingedunkelten Zustand. Obwohl sich das Grundgerüst der erfindungsgemäßen Verbindungen der Formeln (I) und (II) nur um ein Kohlenstoffatom unterscheidet, ist dieser kleine Unterschied unerwarteterweise ausreichend, völlig verschiedene Farbtöne zu erzeugen. Diese Eindunklungs-Farbtöne sind aufgrund der Doppelabsorptionsbande nicht-brilliant (d.h. beispielsweise nicht intensiv orange oder intensiv blau wie in EP 4240797 vorgestellt), sondern matt (beispielsweise bläulich-grau oder rötlich-braun), womit sich deutlich leichter und mit weniger Beschränkungen ästhetische graue und braune Mischungs-Farbtöne realisieren lassen.

Phototrope Polymere mit der Kombination dieser beiden annellierten Naphthopyrane zeichnen sich durch sehr stabile und ästhetische Eindunklungs-Farbtöne aus. Darüber hinaus lassen sich so tief eindunkelnde und sehr schnell aufhellende phototrope Produkte realisieren. Außerdem weist diese Kombination in phototropen Kunststoff-Brillengläsern eine exzellente Lebensdauer auf.

Dafür geeignete Polymer-Systeme sind vor allem Polythiourethane, Polyurethane sowie aus Acrylat-Monomeren hergestellte Polymere. Um für jede Polymer-Matrix die bestmöglichen phototropen Eigenschaften (d.h. Eindunklungstiefe, Aufhellgeschwindigkeit und Lebensdauerstabilität) zu erhalten, werden die Substituenten sowie die Koeffizienten m, n und p in den Formeln (I) und (II) optimal an die jeweilige Matrix angepasst.

Polythiourethane sind die mit Abstand weitverbreitetsten Materialien für Kunststoff-Brillengläser mit höheren Brechungsindices von ≥1.60. Je höher der Brechungsindex ist, umso dünner kann ein Korrektions-Brillenglas gefertigt werden. Wie bereits in EP 4 240 797 ausgeführt, ist für den Einsatz in Polythiourethanen das Vorliegen einer an das Farbstoff-Grundgerüst kovalent gebundenen längeren Poly(propylenoxy)-Kette zur Realisierung exzellenter phototroper Eigenschaften notwendig. Grund dafür ist, dass die für ophthalmische Zwecke eingesetzten sehr dichten Polythiourethan-Duroplasten konventionellen photochromen Farbstoffen keinerlei Raum zur Öffnung der farblosen Naphthopyran-Form zur offenen (farbigen) Merocyanin-Form durch langwellige UV-Strahlung geben (z.B. Sonnenlicht; siehe Figur 1 unten). Daher ist keine oder nur eine äußerst schwache Eindunklung bei Bestrahlung mit langwelligem UV-Licht zu beobachten. Im Gegensatz dazu weisen die erfindungsgemäßen annellierten Naphthopyrane aufgrund der kovalent angebundenen längeren Poly(propylenoxy)-Kette (mit $p \geq 10$ in Formeln (I) und (II)) eine exzellente Eindunklungstiefe bei Bestrahlung mit langwelligem UV-Licht auf. Offensichtlich wird durch die Anwesenheit der längeren Poly(propylen-oxy)-Kette die unmittelbare Farbstoff-Umgebung entweder sterisch (Änderung der Umgebungs-Netzwerkdichte) oder elektronisch (Änderung der Umgebungs-Polarität) so modifiziert, dass eine Öffnung der nicht-angeregten (farblosen) Form zur offenen (farbigen) Form durch langwellige UV-Strahlung gut möglich wird. Die lange Poly(propylen-oxy)-Kette sitzt nahe am photolabilen Zentrum des photochromen Farbstoffes und damit nahe am Ort des Bindungsbruches bei Anregung bzw. der Bindungs-Rückbildung bei der Aufhellung (siehe Figur 2 unten) und kann so eine effiziente Abschirmung vom Thiourethan-Polymer bewirken.

Bezüglich der Länge der Poly(propylenoxy)-Kette ist anzumerken, dass unterhalb einer Poly(propylenoxy)-Kettenlänge von etwa 10 ($p < 10$) ein deutliches Nachlassen der phototropen Leistung zu beobachten ist, die Abschirmung des Farbstoffes von der Polythiourethan-Umgebung ist dann offensichtlich nicht mehr effektiv möglich.

Die Poly(propylenoxy)-Kette in den erfindungsgemäßen Verbindungen der Formeln (I) und (II) ist entweder direkt (d.h. n = 0) oder über eine Succinyloxy-Brücke (d.h. n = 1) an das Farbstoff-Grundgerüst gebunden. Aus Syntheseeffizienz- sowie Aufhellgeschwindigkeits-Gründen (siehe Tabelle 1) ist es oftmals vorteilhafter, noch eine zusätzliche Glykol-Brücke einzuführen (d.h. m = 1).

Die erfindungsgemäßen Verbindungen der Formel (I) weisen - vor allem abhängig von den Donor- Eigenschaften des Substituenten $R_2$ - matt rötliche ($R_2$ = H) bis matt violette ($R_2$ = Diarylamino) Eindunklungs-Farbtöne auf. Am geeignetsten erweisen sich hier Phenoxy- und vor allem Alkoxy-Gruppen als Substituent $R_2$, da diese Substituenten matt rötlich-braune Eindunklungs-Farbtöne generieren und sich damit sehr leicht ästhetische graue und braune Mischungs-Farbtöne realisieren lassen (siehe erfindungsgemäße Verbindung 1).

Die erfindungsgemäßen Verbindungen der Formel (II) weisen - ebenfalls vor allem abhängig von den Donor-Eigenschaften des Substituenten $R_2$, aber mit größerer Farb-Bandbreite - matt gelblich-olive ($R_2$ = Alkoxy; siehe erfindungsgemäße Verbindung 2) bis matt bläulich-graue ($R_2$ = Diarylamino; siehe erfindungsmäße Verbindung 3) Eindunklungs-Farbtöne auf.

Im direkten Vergleich der beiden Homologen mit nur Wasserstoff als Substituent $R_2$ hellen Verbindungen gemäß Formel (I) deutlich langsamer auf als Verbindungen gemäß Formel (II) - ein weiterer unerwarteter Unterschied zwischen den homologen Systemen neben den unterschiedlichen Farbtönen. Dies wird später noch genauer erläutert.

Im Gegensatz dazu weisen die erfindungsgemäßen Verbindungen aus EP 4 240 797 brilliante Eindunklungs-Farbtöne auf (intensive Orange-Töne bzw. intensive Blau-Töne), da sie jeweils nur eine Absorptionsbande im sichtbaren Wellenlängenbereich im eingedunkelten Zustand aufweisen, während die erfindungsgemäß eingesetzten Verbindungen eine Doppelabsorptionsbande aufweisen.

Dieser Unterschied ist anschaulich in den Figuren 2 und 3 dargestellt. Figur 2 zeigt die Referenz-Verbindungen 1 (orange; Verbindung 4 aus EP 4 240 797) sowie 2 (blau; Verbindung 2 aus EP 4 240 797) aus dem Stand der Technik mit nur einer Absorptionsbande. Figur 3 zeigt drei neue, erfindungsgemäß eingesetzte Verbindungen jeweils mit Doppelabsorptionsbande. Die genauen Molekülstrukturen der erfindungsgemäß eingesetzten Verbindungen 1 (aus Formel (I)) sowie 2 und 3 (aus Formel (II)) sind in der Tabelle 1 aufgeführt.

Wie in Figur 2 zu sehen, weisen die erfindungsgemäß eingesetzten Verbindungen zwei Absorptionsmaxima (bzw. Transmissionsminima) im sichtbaren Wellenlängenbereich auf und absorbieren allgemein über einen deutlich breiteren Bereich - resultierend in matten Eindunklungs-Farbtönen, womit sich sehr leicht ästhetische graue und braune Mischungs-Farbtöne realisieren lassen.

Die erfindungsgemäße Kombination ist auch deswegen besonders vorteilhaft, da es durch die Wahl geeigneter Substituenten relativ leicht möglich ist, die Aufhellgeschwindigkeiten aneinander anzugleichen (siehe Tabelle 1) - dies ist entscheidend zum Einsatz in Mischungen, damit der Eindunklungs-Farbton über den gesamten Anregungs- und Aufhellzyklus konstant bleibt.

Die erfindungsgemäß eingesetzten Verbindungen gemäß Formeln (I) und (II) weisen eine exzellente Lebensdauerstabilität gegen UV-Strahlung auf - bedingt durch die Anwesenheit der drei Nichtwasserstoff-Substituenten $R_9$ bis $R_{11}$ an den beiden nichtaromatischen Kohlenstoffatomen in Formel (I) bzw. der beiden Nichtwasserstoff-Substituenten $R_{13}$ und $R_{14}$ in Formel (II). Ersteres wurde bereits in EP 4 240 797 ausgeführt, entsprechende Verbindungen mit weniger Nichtwasserstoff-Substituenten an diesen Positionen weisen aufgrund der leichteren Oxidierbarkeit an dieser Stelle und der Entstehung farbiger Oxidationsprodukte eine deutlich schlechtere Lebensdauer auf. Drei Nichtwasserstoff-Substituenten in Formel (I) sind dabei das Optimum. Ein Wasserstoffatom am Kohlenstoffatom mit $R_{11}$ in Formel (I) ist aus sterischen Gründen notwendig, da ein weiterer Nichtwasserstoff-Substituent am Kohlenstoffatom mit $R_{11}$ die Öffnung der farblosen Naphthopyran-Form zur offenen (farbigen) Form durch langwellige UV-Strahlung sterisch zu stark behindert und dadurch nur eine schwache Eindunklung bei Bestrahlung mit langwelligem UV-Licht zu beobachten ist.

Die Funktionsweise der Anregung (Bindungsbruch durch langwelliges UV-Licht unter Entstehung der farbigen Form) ist ebenfalls in Figur 1 dargestellt. Die Aufhellung zurück zur nicht-angeregten Naphthopyran-Form erfolgt rein thermisch - daher liegen bei höheren Temperaturen im Mittel weniger Moleküle im eingedunkelten Zustand vor, da die Rück-Reaktion schneller ist. Es resultiert die für phototrope Kunststoff-Brillengläser typische Temperaturabhängigkeit der Eindunklungstiefe. Bei gleicher UV-Intensität ist die Eindunklungstiefe umgekehrt proportional zur Temperatur. Der Proportionalitätsfaktor - d.h. wie stark diese Abhängigkeit ist - ist aber in gewissem Umfang durch die Wahl der Substituenten beeinflussbar.

Zur Messung der phototropen und spektralen Eigenschaften (siehe Figur 3 sowie Tabelle 1) wurden die erfindungsgemäßen Verbindungen der Formeln (I) und (II) in ein optisches, d.h. für kommerzielle Kunststoff-Brillengläser geeignetes, Thiourethan-Polymer eingebracht. Dazu wurden die photochromen Farbstoffe in der flüssigen Isocyanat-Komponente gelöst und nach Zusatz der Thiol-Komponente sowie des Polyadditions-Katalysators mit Hilfe eines Temperaturprogrammes thermisch polymerisiert.

Phototrope Leistung (Eindunklungstiefe und Aufhellgeschwindigkeit) sowie Eindunklungs-Farbort (siehe Figur

4) der so hergestellten Probekörper (Plangläser mit 2 mm Dicke) wurden anschließend mit Norm-Messungen bei 23°C gemäß DIN EN ISO 8980-3 ermittelt.

Figur 4 zeigt anschaulich einen Vergleich der Eindunklungs-Farborte in a*/b*-Farbkoordinaten von erfindungsgemäßen Verbindungen gegen Referenz-Verbindungen aus dem Stand der Technik. Die Molekülstrukturen der in Figur 4 abgebildeten erfindungsgemäßen Verbindungen sind in Tabelle 1 aufgeführt. Die erfindungsgemäßen Verbindungen 1, 4, 5 und 6 werden dabei durch die Formel (III) beschrieben, die erfindungsgemäßen Verbindungen 2, 3 und 7 durch die Formel (IV). Formel (III) stellt dabei eine Untergruppe von (I) dar, Formel (IV) eine Untergruppe von (II).

Ein negativer a*-Wert im a*/b*-Farbkoordinatensystem repräsentiert einen grünen Eindunklungs-Farbton, ein positiver a*-Wert einen roten. Ein negativer b*-Wert repräsentiert einen blauen Farbton, ein positiver b*-Wert einen gelben. Davon abgeleitete Mischfarben wie violett oder orange finden sich dann im Bereich zwischen den jeweiligen Halbachsen (also zwischen der Blau- und Rot-Halbachse bzw. der Gelb- und Rot-Halbachse). Je weiter der Messpunkt vom Koordinaten-Ursprung entfernt ist, der definitionsgemäß die Abwesenheit von Farbe repräsentiert, umso intensiver und brillianter ist der Farbton. Messpunkte in der Nähe des Koordinaten-Ursprungs (Region A repräsentiert dabei besonders ästhetische Grau-Töne) symbolisieren matte Farbtöne wie z.B. bläulich-grau oder rötlich-braun. Eine Besonderheit sind Braun-Farbtöne, die eine Mischung von verschiedenen Grundfarben sind. Empirisch hat sich gezeigt, dass ästhetische Braun-Töne (z.B. kastanienbraun) im a*/b*-Farbkoordinaten-System im Bereich der Region B anzutreffen sind.

Der rötlich-braune Eindunklungs-Farbton der erfindungsgemäßen Verbindung 1 der Formel (III) befindet sich bereits in der Nähe dieser Region B - deutlich näher im Vergleich zur intensiv orangen Referenz-Verbindung 1 (Verbindung 4 aus EP 4 240 797). Durch Kombination mit dem gelblich-oliven Eindunklungs-Farbton der erfindungsgemäßen Verbindung 2 der Formel (IV) in geeignetem Mischungsverhältnis lassen sich sehr leicht ästhetische braune Farbtöne der Region B realisieren.

Analog dazu befindet sich der bläulich-graue Eindunklungs-Farbton der erfindungsgemäßen Verbindung 3 der Formel (IV) bereits in der Nähe der Region A, die ästhetische graue Farbtöne repräsentiert; erneut deutlich näher im Vergleich zur intensiv blauen Referenz-Verbindung 2 (Verbindung 2 aus EP 4 240 797). Durch Kombination mit dem rötlich-braunen Eindunklungs-Farbton der erfindungsgemäßen Verbindung 1 der Formel (III) in geeignetem Mischungsverhältnis lassen sich sehr leicht ästhetische graue Farbtöne der Region A realisieren; manchmal ist dafür noch die Zugabe einer geringen Menge erfindungsgemäßer Verbindung 2 der Formel (IV) vorteilhaft.

Das Aufhellverhalten aus dem vollständig eingedunkelten Zustand der erfindungsgemäßen Verbindungen ist ebenfalls in Tabelle 1 aufgeführt. Als Maß für das Aufhellverhalten wird der prozentuale relative Anstieg der Transmission nach 2 Minuten Aufhellung definiert, normiert auf den photochromen Gesamthub der vollständigen Aufhellung. Diese praxisrelevante Größe zur Beschreibung der photochromen Kinetik wird hier Relative Aufhellung $R_{2\,\mathrm{min}}$ benannt:

$$R_{2\,\mathrm{min}} = 100 \times \frac{\tau_{2\,min} - \tau_s}{\tau_0 - \tau_s}\ [\%]$$

worin

$t_0$ der Lichttransmissionsgrad im nicht-angeregten Zustand ist;
ts der Lichttransmissionsgrad im eingedunkelten Zustand ist;
$t_{2min}$ der Lichttransmissionsgrad nach 2 min Aufhellung aus dem eingedunkelten Zustand ist.

Der angegebene Prozentwert wird aus den Transmissionsdaten der phototropen Kinetikmessung nach DIN EN ISO 8980-3 bei 23°C berechnet. Im ersten Schritt wird die Transmissions-Differenz zwischen dem Zustand nach 2 min Aufhellung und dem zuvor erreichten eingedunkelten Zustand ermittelt, im zweiten Schritt die Transmissions-Differenz zwischen dem aufgehellten und dem eingedunkelten Zustand. Das Verhältnis der beiden Transmissions-Differenzen wird mit 100 multipliziert, um einen prozentualen Wert zu erhalten. Ein Wert von 50 % für $R_{2\,\mathrm{min}}$ bedeutet, dass nach 2 min Aufhellung bereits die Hälfte des photochromen Hubes zum voll aufgehellten Zustand zurückgelegt ist. Je größer der prozentuale Wert ist, umso schneller ist die Aufhellung.

**Tabelle 1**

| Molekülstrukturen der in Figur 3 und 4 dargestellten Verbindungen gemäß Formeln (III) und (IV) sowie deren Aufhellgeschwindigkeit nach 2 min bei 23°C im Thiourethan-Polymer: | | |
|---|---|---|
| 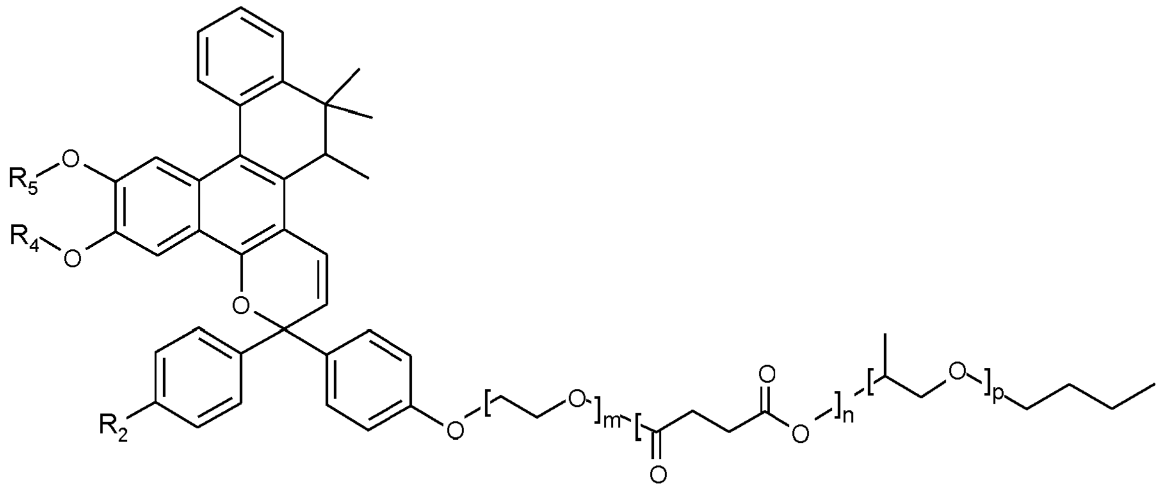 (III) | | |
| | Substituenten in Formel (III) | Relative Aufhellung nach 2 min $R_{2\ min}$ [%] |
| Erfindungsgemäße Verbindung 1 | p ≈ 42 (Gauss-Verteilung); m = n = 1 $R_2$ = OMe; $R_4/R_5$ = $CH_2CH_2$ | 50 % |
| Erfindungsgemäße Verbindung 4 | p ≈ 42 (Gauss-Verteilung); m = n = 1 $R_2$ = OMe; $R_4$ = $R_5$ = $CH_3$ | 70 % (aber ungenügende Eindunklungstiefe) |
| Erfindungsgemäße Verbindung 5 | p ≈ 42 (Gauss-Verteilung); m = n = 1 $R_2$ = H; $R_4/R_5$ = $CH_2CH_2$ | 30 % |
| Erfindungsgemäße Verbindung 6 | p ≈ 42 (Gauss-Verteilung); m = 0; n = 1 $R_2$ = OMe; $R_4/R_5$ = $CH_2CH_2$ | 25% |

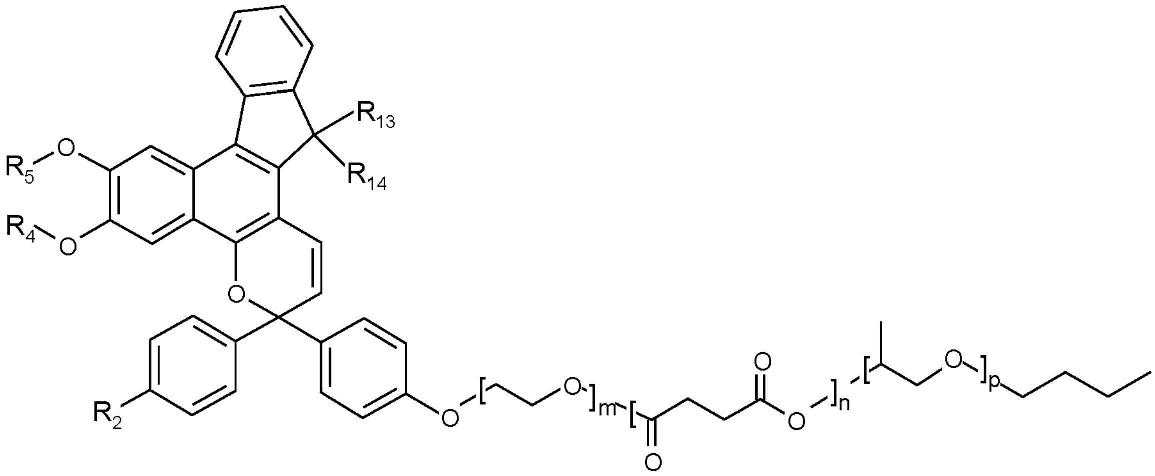

(IV)

| | Substituenten in Formel (IV) | Relative Aufhellung nach 2 min $R_{2\ min}$ [%] |
|---|---|---|
| Erfindungsgemäße Verbindung 2 | p ≈ 42 (Gauss-Verteilung); m = n = 1 $R_2$ = OMe; $R_4$ = $R_5$ = $CH_3$; $R_{13}$ = $R_{14}$ = $CH_2$-$CH_2$-$CH_3$ (n-Propyl) | 50 % |
| Erfindungsgemäße Verbindung 3 | p ≈ 42 (Gauss-Verteilung); m = n = 1 $R_2$ = $NPh_2$; $R_4$ = $R_5$ = $CH_3$; $R_{13}$ = $R_{14}$ = $CH_2$-$CH_3$ (Ethyl) | 50 % |
| Erfindungsgemäße Verbindung 7 | p ≈ 42 (Gauss-Verteilung); m = n = 1 $R_2$ = OMe; $R_4$ = $R_5$ = $CH_3$; $R_{13}$ = $R_{14}$ = $CH_2$-$CH_3$ (Ethyl) | 35 % |
| Erfindungsgemäße Verbindung 8 | p ≈ 42 (Gauss-Verteilung); m = n = 1 $R_2$ = OMe; $R_4$/$R_5$ = $CH_2CH_2$; $R_{13}$ = $R_{14}$ = $CH_2$-$CH_3$ (Ethyl) | 20 % |

Wichtig ist bei Kombinationen von Verbindungen der Formeln (III) und (IV) in Farbstoff-Mischungen, dass die Aufhellgeschwindigkeiten der Partner aufeinander abgestimmt sind - ansonsten resultiert ein ungewünschter Farbdrift während der Aufhellung. Daher sind die erfindungsgemäßen Verbindungen 1, 2 und 3 perfekt aufeinander abgestimmte Partner für Farbstoff-Mischungen mit ästhetischen grauen und braunen Eindunklungs-Farbtönen.

Hervorragende, schnell aufhellende, phototrope Kunststoff-Brillengläser im Handel weisen mittlerweile nach 2 min Aufhellung einen exzellenten $R_{2\ min}$-Wert von etwa 50 % auf, d.h. durch geeignete Kombination der erfindungsgemäßen Verbindungen 1, 2 und 3 lassen sich - wie bereits ausgeführt - relativ einfach hervorragende phototrope Kunststoff-Brillengläser mit ästhetischen grauen und braunen Farbtönen realisieren, die bei exzellenter Eindunklungstiefe sehr schnell aufhellen.

Die langsamer aufhellenden erfindungsgemäßen Verbindungen 5, 6, 7 und 8 können in speziellen phototropen Kunststoff-Brillengläsern für wärmere Klimazonen eingesetzt werden, da diese aufgrund der im Vergleich zu den erfindungsgemäßen Verbindungen 1, 2 und 3 langsameren Rück-Reaktion (siehe Figur 1 unten) bei höheren Temperaturen tiefer eindunkeln, da noch mehr Farbstoff-Moleküle im eingedunkelten (offenen) Zustand vorliegen.

Die Einstellung der gewünschten Aufhellgeschwindigkeit ist durch Substituenten-Variation in den Formeln (I) und (II) relativ einfach möglich. Dafür gibt es mehrere Hebelstellen:

Die erste Hebelstelle ist unerwarteterweise die Art des Alkyl-Substituenten $R_4$ bzw. $R_5$ - dies zeigt anschaulich der Vergleich der erfindungsgemäßen Verbindungen 1 mit 4 bzw. der erfindungsgemäßen Verbindungen 7 mit 8. Verbindungen mit einer Ethylen-Brücke für $R_4$/$R_5$- einen annellierten Dioxan-Ring ergebend - hellen deutlich langsamer auf im Vergleich zu Verbindungen mit zwei separaten Alkyl-Substituenten für $R_4$ und $R_5$. Dies ist völlig unerwartet, da sich sowohl der elektronische Effekt (Donorstärke) als auch der sterische Effekt (räumliche Größe) nicht stark voneinander unterscheiden sollten. Dieser Effekt ist sowohl für Verbindungen der Formel (I) als auch (II) zu beobachten. Dies führt dazu, dass die erfindungsgemäße Verbindung 4 zwar extrem schnell aufhellt, aber für hervorragende phototrope Kunststoff-Brillengläser nicht tief genug bei UV-Bestrahlung eindunkelt, da die Rück-Reaktion zum farblosen Grundzustand zu schnell ist.

Unerwarteterweise hellen - bei identischem Substitutions-Muster $R_2$ bis $R_8$ - Verbindungen der Formel (II) nach UV-Belichtung im Vergleich zu Verbindungen der Formel (I) deutlich langsamer auf. Daher hellt die erfindungsgemäße

Verbindung 2 mit zwei separaten Alkyl-Substituenten für $R_4$ und $R_5$ im Gegensatz zur erfindungsgemäßen Verbindung 4 nicht zu schnell auf und generiert eine exzellente Eindunklungstiefe bei gleichzeitig sehr schneller Aufhellung.

Die zweite Hebelstelle ist der elektronische Effekt der Donorstärke des Substituenten $R_2$ - dies zeigt anschaulich der Vergleich der erfindungsgemäßen Verbindungen 1 mit 5 bzw. der erfindungsgemäßen Verbindungen 2 mit 3. Je stärker der Donor $R_2$ ist, umso schneller hellt der photochrome Farbstoff nach UV-Belichtung auf. Diese Tatsache ist nicht neu, sondern wurde schon bei vielen früheren photochromen Naphthopyran-Systemen beobachtet. Damit die erfindungsgemäße Verbindung 3 mit dem sehr starken Diarylamino-Donor nicht zu schnell aufhellt und damit zu schwach eindunkelt, kann eine dritte Hebelstelle (ein sterischer Effekt) ausgenutzt werden, die es allerdings nur bei Verbindungen der Formel (II) gibt - die Größe der Substituenten $R_{13}$ und $R_{14}$. Je größer diese Substituenten und deren sterischen Effekte sind, umso schneller hellen die photochromen Farbstoffe auf. Daher bedingt eine Verkleinerung dieser Substituenten bei der erfindungsgemäßen Verbindung 3 im Vergleich zur erfindungsgemäßen Verbindung 2 (von Propyl auf Ethyl), dass der Effekt des stärkeren Donors für $R_2$ bezüglich schnellerer Aufhellung und schwächerer Eindunklungstiefe ausgeglichen wird. Wenn die Substituenten allerdings noch kleiner werden (Methyl), hellen die photochromen Farbstoffe allgemein deutlich zu langsam auf. Diese dritte Hebelstelle gibt es nicht bei Verbindungen der Formel (I), da - wie bereits ausgeführt - am Kohlenstoffatom mit $R_{11}$ ein Wasserstoffatom sitzen muss, um eine ausreichende Eindunklungstiefe erzielen zu können.

Die vierte und letzte Hebelstelle ist die Ankupplung der Poly(propylenoxy)-Kette über die Succinyloxy-Gruppe (im Falle von n = 1) direkt an das Naphthopyran-Grundgerüst (d.h. m = 0) oder über eine zusätzliche Glykol-Brücke (d.h. m = 1) - dies zeigt anschaulich der Vergleich der erfindungsgemäßen Verbindungen 1 mit 6. Photochrome Farbstoffe ohne Glykol-Brücke (d.h. m = 0) hellen deutlich langsamer auf - der Grund dafür liegt analog zur zweiten Hebelstelle am Unterschied in der Donor-Stärke des direkt an den Benzol-Ring kovalent gebundenen Substituenten. Verbindungen mit dem stärkeren Alkoxy-Donor (d.h. m = 1) hellen im Vergleich zu Verbindungen mit dem schwächeren Acyloxy-Donor (d.h. m = 0) deutlich schneller auf.

Mit diesen verschiedenen Hebelstellen steht insofern ein umfangreiches Repertoire zur Verfügung, um die gewünschten phototropen Eigenschaften maßzuschneidern, um jeweils passende Partner für die erfindungsgemäße Kombination zu generieren.

Der Umfang der vorliegenden Erfindung beschränkt sich nicht nur auf homogen massegefärbte phototrope Polythiourethane, Polyurethane sowie aus Acrylat-Monomeren hergestellte Polymere, sondern umfasst vor allem auch Zweikomponenten-Systeme, bei denen eine 0,1-1 mm dünne phototrope Polymer-Funktionsschicht auf einem Polymer-Grundkörper anpolymerisiert wird (Anguss-Verfahren). Dieses Verfahren hat neben attraktiven Herstellkosten den großen Vorteil, dass auf diese Weise im Gegensatz zu homogen massegefärbten Produkten leicht ein exzellenter UV-Schutz für den Brillenträger erreicht werden kann, indem eine beliebige Menge UV-Absorber in den Polymer-Grundkörper eingebracht werden kann. Dies ist bei homogen massegefärbten phototropen Polymeren nicht möglich, da eingebrachte UV-Absorber den photochromen Farbstoffen das zur Eindunklung benötigte langwellige UV-Licht wegfiltern. Die vorliegende Erfindung umfasst aber auch Sandwich-Systeme, bei denen sich eine 0,1-1 mm dünne phototrope Polymer-Funktionsschicht zwischen zwei Polymer-Körpern befindet.

Weiterhin ist der Umfang der vorliegenden Erfindung nicht auf die Anwesenheit der beiden Naphthopyran-Homologen gemäß Formeln (I) und (II) beschränkt. Zusätzlich dazu können weitere maßgeschneiderte photochrome Farbstoffe, Permanentfarbstoffe (für vorgefärbte Produkte) sowie Additive, insbesondere solche zur Verbesserung von Produkteigenschaften, eingesetzt werden.

Der Umfang der vorliegenden Erfindung umfasst zudem die Verwendung der erfindungsgemäßen Kombination annellierter Naphthopyran-Homologe in Polymeren für phototrope Produkte, insbesondere für ophthalmische Zwecke, in Linsen und Gläsern für Brillen aller Art, wie beispielsweise Korrektionsbrillen, Autofahrer-Brillen, Skibrillen, Sonnenbrillen, Motorradbrillen, für Visiere von Schutzhelmen und dergleichen und für Sonnenschutz-Zwecke in Fahrzeugen und im Baubereich, in Form von Fenstern, Schutzblenden, Abdeckungen, Dächern und dergleichen.

## Patentansprüche

1. Kombination von zwei homologen, photochromen annellierten Naphthopyranen gemäß den nachfolgenden allgemeinen Formeln (I) und (II):

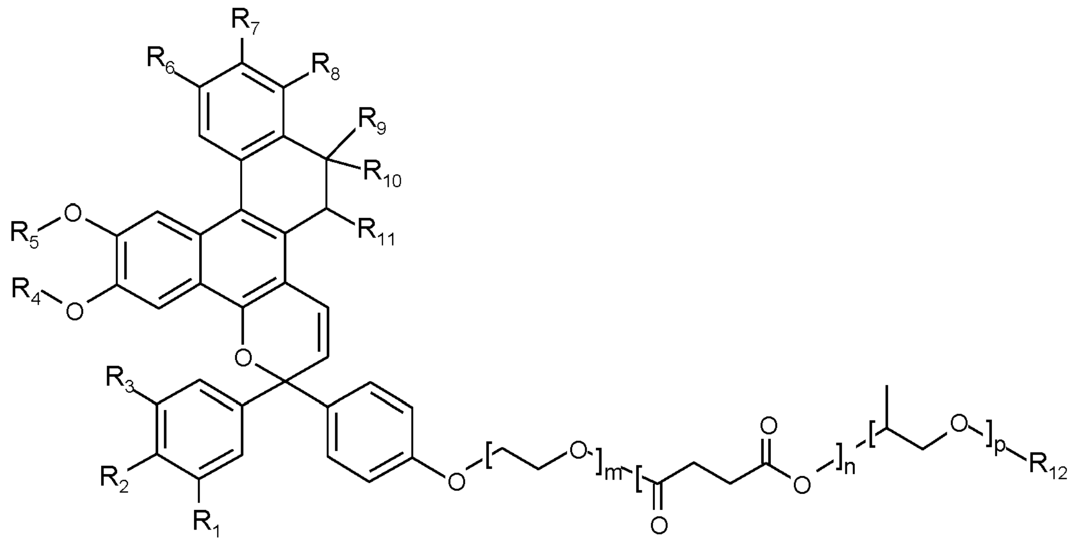

(I)

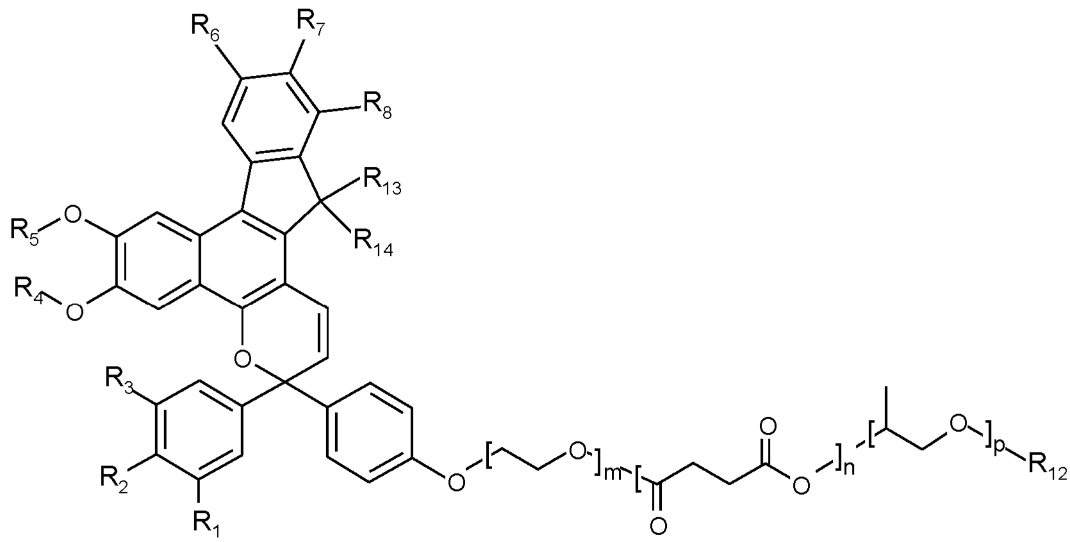

(II)

wobei in den Formeln (I) bzw. (II)
m eine ganze Zahl zwischen 0 und 1 ist,
n eine ganze Zahl zwischen 0 und 1 ist, und
p eine ganze Zahl zwischen 0 und 50 darstellt;
die Reste $R_1$, $R_2$ und $R_3$ jeweils unabhängig voneinander einen Substituenten darstellen, ausgewählt aus Wasserstoff, Brom, Chlor, Fluor, einem ($C_1$-$C_6$)-Alkyl-Rest, einem ($C_3$-$C_7$)-Cycloalkyl-Rest, einem ($C_1$-$C_6$)-Thioalkyl-Rest, einem ($C_1$-$C_6$)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Di-($C_1$-$C_6$)-alkylamino-Rest, einem Piperidinyl-Rest, einem 3,5-Dimethylpiperidinyl-Rest, einem Indolinyl-Rest, einem Morpholinyl-Rest, einem 2,6-Dimethylmorpholinyl-Rest, einem Thiomorpholinyl-Rest, einem Azacycloheptyl-Rest, einem Phenylamino-Rest, einem ($C_1$-$C_6$)-Alkyl-phenylamino-Rest, einem Diphenylamino-Rest, einem (4-Methoxyphenyl)-phenylamino-Rest, einem Bis(4-methoxyphenyl)amino-Rest, einem (4-Ethoxyphenyl)-phenylamino-Rest, einem Bis(4-Ethoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11 -Dihydro-dibenz[b,f]azepinyl-Rest;

oder die Reste $R_1$ und $R_2$ zusammen die Gruppierung $-X-(CH_2)_q-Y-$ darstellen, wobei X und Y unabhängig voneinander aus den Gruppierungen -O-, -S-, $-N(C_1-C_6)$-Alkyl, - $NC_6H_5$-, $-CH_2-$, $-C(CH_3)_2-$, $-C(C_2H_5)_2-$ oder $-C(C_6H_5)_2-$ ausgewählt sind und q eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass X oder Y, wenn diese $-CH_2-$ darstellen, zusammen mit der jeweils benachbarten $CH_2$-Gruppe auch einen annellierten Benzol-Ring darstellen können;
die Reste $R_4$ und $R_5$ jeweils unabhängig voneinander einen Substituenten darstellen, ausgewählt aus einem $(C_1-C_6)$-Alkyl-Rest, einem $(C_3-C_7)$-Cycloalkyl-Rest, einem Trifluormethyl-Rest, einem Phenyl-Rest, oder einem Benzyl-Rest;
oder die Reste $R_4$ und $R_5$ zusammen die Gruppierung $-(CH_2)_r-$ darstellen und r eine ganze Zahl von 1 bis 3 darstellt; mit der Maßgabe, dass, wenn dieser Zahlenwert 2 oder 3 ist, an zwei benachbarten $CH_2$-Gruppen auch ein Benzol-Ring annelliert sein kann; sowie mit der weiteren Maßgabe, dass eine der $CH_2$-Einheiten durch $-C(CH_3)_2-$, - $C(C_2H_5)_2-$ oder $-C(C_6H_5)_2-$ ersetzt sein kann;
die Reste $R_6$, $R_7$ und $R_8$ jeweils unabhängig voneinander einen Substituenten darstellen, ausgewählt aus Wasserstoff, einem $(C_1-C_6)$-Alkyl-Rest, einem $(C_3-C_7)$-CycloalkylRest, einem $(C_1-C_6)$-Alkoxy-Rest, einem Phenyl-Rest, einem 4-Methoxyphenyl-Rest, einem 3,4,5-Trimethoxyphenyl-Rest, einem 4-(Dimethylamino) phenyl-Rest, einem 4-(N-Morpholinyl)phenyl-Rest, einem 4-(Diphenylamino)phenyl-Rest, einem 4-(Trifluormethyl)phenyl-Rest, einem Phenoxy-Rest oder einem Benzyl-Rest;
oder die Reste $R_6$ und $R_7$ zusammen oder $R_7$ und $R_8$ zusammen einen annellierten Benzol-Ring bilden, der un-, mono- oder disubstituiert sein kann, wobei die Substituenten ausgewählt sein können aus Wasserstoff, einem $(C_1-C_6)$-Alkyl-Rest, einem $(C_1-C_6)$-Alkoxy-Rest, einem Phenyl-Rest oder einem Benzyl-Rest;
oder die Reste $R_6$ und $R_7$ zusammen oder $R_7$ und $R_8$ zusammen ein annelliertes Naphthalin-Ringsystem, ein annelliertes Benzofuran-Ringsystem, ein annelliertes Benzothiophen-Ringsystem, ein annelliertes 3,3-Dimethylinden-Ringsystem oder ein annelliertes 2H-Chromen-Ringsystem bilden;
die Reste $R_9$, $R_{10}$, $R_{11}$, $R_{13}$ und $R_{14}$ jeweils unabhängig voneinander einen Substituenten darstellen, ausgewählt aus einem $(C_1-C_6)$-Alkyl-Rest oder einem Phenyl-Rest;
der Rest $R_{12}$ einen Substituenten darstellt, ausgewählt aus einem $(C_1-C_6)$-Alkyl-Rest, einem Phenyl-Rest oder der Gruppierung

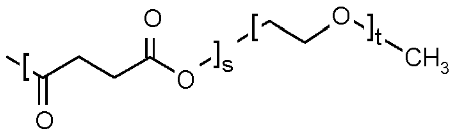

wobei s eine ganze Zahl zwischen 0 und 1 darstellt und t eine ganze Zahl zwischen 1 und 50.

**2.** Kombination gemäß Anspruch 1 zur Einbringung in Polythiourethane, worin p eine ganze Zahl zwischen 10 und 50 darstellt.

**3.** Kombination gemäß Anspruch 1 oder 2, weiter umfassend einen oder mehrere weitere Bestandteile, ausgewählt aus photochromen Farbstoffen, verschieden von solchen der Formeln (I) und (II), Permanentfarbstoffen oder Additiven.

**4.** Kombination gemäß einem der Ansprüche 1 bis 3, worin die phototropen Produkte Zweikomponenten-Systeme darstellen, bei denen eine 0,1-1 mm dünne phototrope Polymer-Funktionsschicht auf einem Polymer-Grundkörper anpolymerisiert ist, oder Sandwich-Systeme darstellen, bei denen sich eine 0,1-1 mm dünne phototrope Polymer-Funktionsschicht zwischen zwei Polymer-Körpern befindet.

**5.** Verwendung der Kombination gemäß einem der Ansprüche 1 bis 4 in Polymeren für phototrope Produkte, insbesondere für ophthalmische Zwecke, in Linsen und Gläsern für Brillen aller Art, wie beispielsweise Korrektionsbrillen, Autofahrer-Brillen, Skibrillen, Sonnenbrillen, Motorradbrillen, für Visiere von Schutzhelmen und dergleichen und für Sonnenschutzzwecke in Fahrzeugen und im Baubereich, in Form von Fenstern, Schutzblenden, Abdeckungen, Dächern und dergleichen.

Figur 1

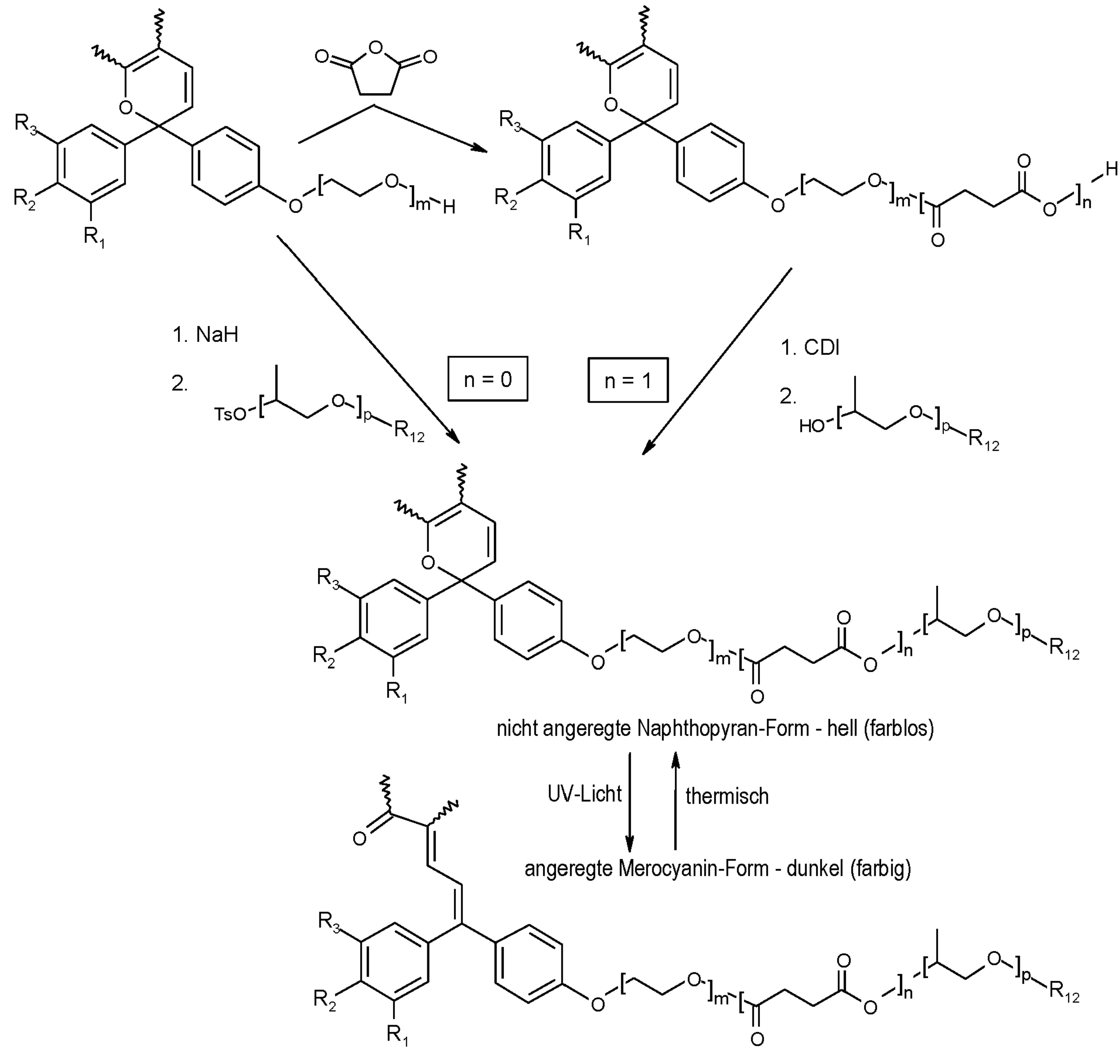
1. NaH
2.
n = 0
n = 1
1. CDI
2.
nicht angeregte Naphthopyran-Form - hell (farblos)
UV-Licht
thermisch
angeregte Merocyanin-Form - dunkel (farbig)

Figur 2

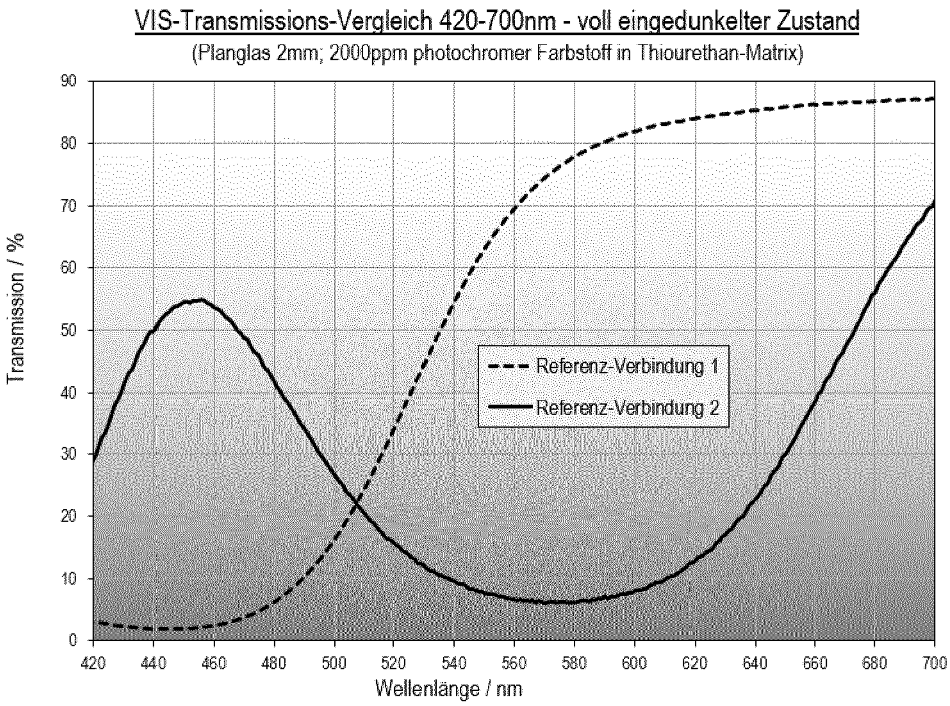
VIS-Transmissions-Vergleich 420-700nm - voll eingedunkelter Zustand
(Planglas 2mm; 2000ppm photochromer Farbstoff in Thiourethan-Matrix)
Transmission / %
0
10
20
30
40
50
60
70
80
90
420
440
460
480
500
520
540
560
580
600
620
640
660
680
700
Wellenlänge / nm
Referenz-Verbindung 1
Referenz-Verbindung 2

Figur 3

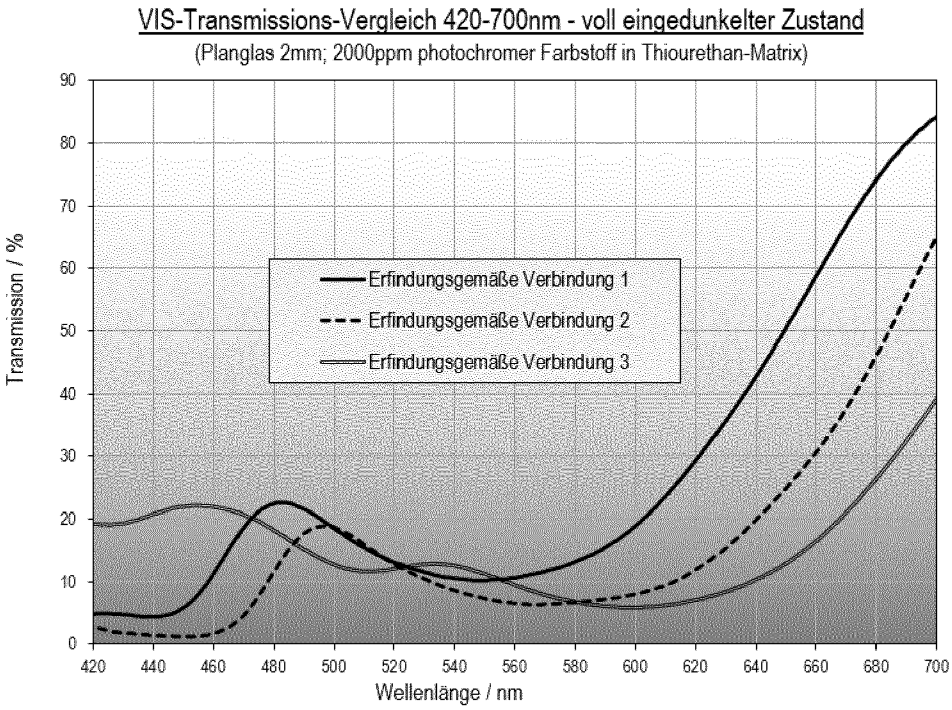
VIS-Transmissions-Vergleich 420-700nm - voll eingedunkelter Zustand
(Planglas 2mm; 2000ppm photochromer Farbstoff in Thiourethan-Matrix)
Transmission / %
Wellenlänge / nm
Erfindungsgemäße Verbindung 1
Erfindungsgemäße Verbindung 2
Erfindungsgemäße Verbindung 3
0
10
20
30
40
50
60
70
80
90
420
440
460
480
500
520
540
560
580
600
620
640
660
680
700

Fig. 4

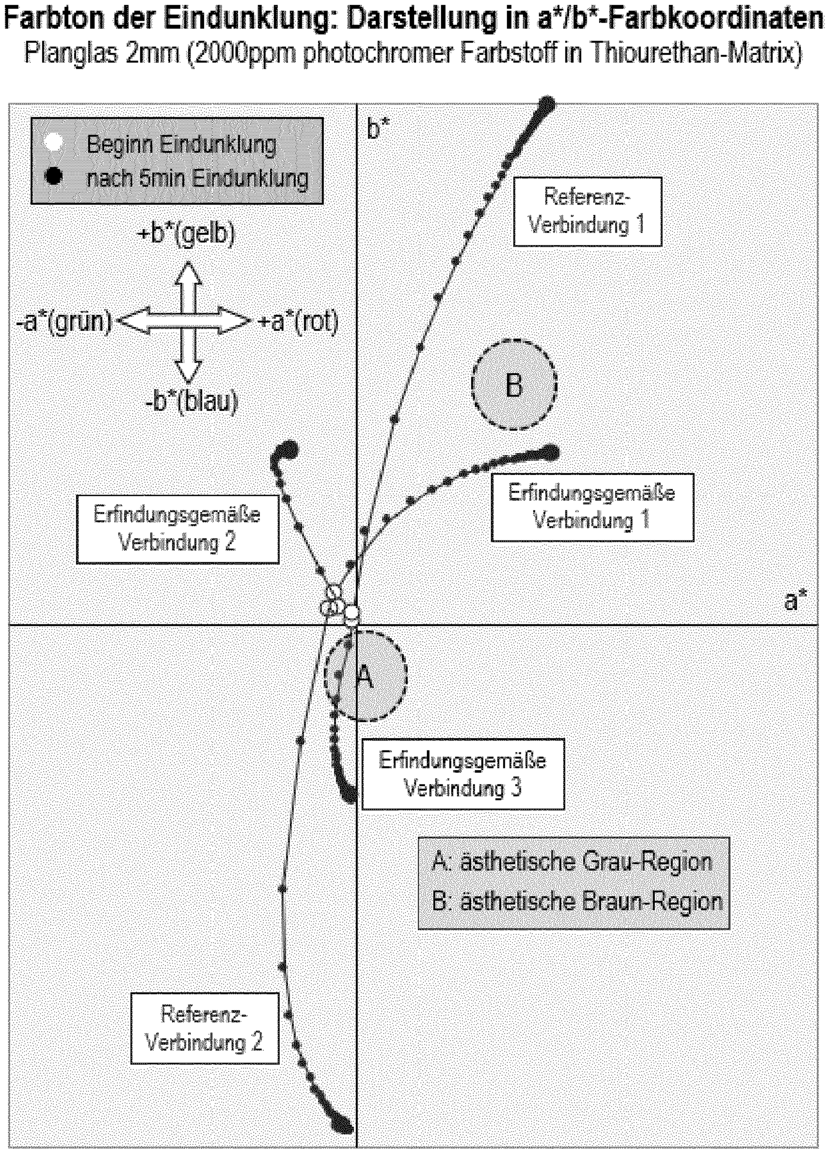
Farbton der Eindunklung: Darstellung in a*/b*-Farbkoordinaten
Planglas 2mm (2000ppm photochromer Farbstoff in Thiourethan-Matrix)
Beginn Eindunklung
nach 5min Eindunklung
+b*(gelb)
-a*(grün)
+a*(rot)
-b*(blau)
b*
a*
Referenz-Verbindung 1
B
Erfindungsgemäße Verbindung 1
Erfindungsgemäße Verbindung 2
A
Erfindungsgemäße Verbindung 3
A: ästhetische Grau-Region
B: ästhetische Braun-Region
Referenz-Verbindung 2

Europäisches Patentamt
European Patent Office
Office européen des brevets

# EUROPÄISCHER RECHERCHENBERICHT

Nummer der Anmeldung
EP 25 15 2867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2018 004790 A1 (RODENSTOCK GMBH [DE]) 19. Dezember 2019 (2019-12-19)<br>* Seite 8 - Seite 9; Ansprüche 1-2 *<br>----- | 1-5 | INV.<br>C09B67/22<br>C09B69/10<br>C09K9/02 |
| A | EP 4 240 797 A1 (RODENSTOCK GMBH [DE]) 13. September 2023 (2023-09-13)<br>* Seite 12; Anspruch 1 *<br>----- | 1-5 | |
| Y | EP 4 270 067 A1 (HOYA LENS THAILAND LTD [TH]) 1. November 2023 (2023-11-01)<br>* Seite 62; Anspruch 1 *<br>* Seite 64; Anspruch 16 *<br>----- | 1-5 | |

RECHERCHIERTE SACHGEBIETE (IPC)
C09B
H05B
C09K

Der vorliegende Recherchenbericht wurde für alle Patentansprüche erstellt

1

| Recherchenort | Abschlußdatum der Recherche | Prüfer |
|---|---|---|
| München | 9. Juli 2025 | Jeanjean, Fabien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 15 2867

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2025

| Im Recherchenbericht angeführtes Patentdokument | Datum der Veröffentlichung | Mitglied(er) der Patentfamilie | Datum der Veröffentlichung |
|---|---|---|---|
| DE 102018004790 A1 | 19-12-2019 | AU 2019284814 A1 | 07-01-2021 |
| | | BR 112020025418 A2 | 16-03-2021 |
| | | CL 2020003239 A1 | 23-04-2021 |
| | | CN 112424180 A | 26-02-2021 |
| | | DE 102018004790 A1 | 19-12-2019 |
| | | EP 3807258 A1 | 21-04-2021 |
| | | ES 2904517 T3 | 05-04-2022 |
| | | IL 279298 A | 31-01-2021 |
| | | JP 7362674 B2 | 17-10-2023 |
| | | JP 2021527643 A | 14-10-2021 |
| | | PH 12020552133 A1 | 28-06-2021 |
| | | US 2021253865 A1 | 19-08-2021 |
| | | WO 2019238495 A1 | 19-12-2019 |
| EP 4240797 A1 | 13-09-2023 | CL 2023003983 A1 | 24-05-2024 |
| | | CN 118019810 A | 10-05-2024 |
| | | EP 4240797 A1 | 13-09-2023 |
| | | ES 3002283 T3 | 06-03-2025 |
| | | JP 2025501042 A | 17-01-2025 |
| | | US 2025092262 A1 | 20-03-2025 |
| | | WO 2023135127 A1 | 20-07-2023 |
| EP 4270067 A1 | 01-11-2023 | CN 116323577 A | 23-06-2023 |
| | | CN 116323857 A | 23-06-2023 |
| | | EP 4198102 A1 | 21-06-2023 |
| | | EP 4198583 A1 | 21-06-2023 |
| | | EP 4269532 A1 | 01-11-2023 |
| | | EP 4270067 A1 | 01-11-2023 |
| | | EP 4549533 A1 | 07-05-2025 |
| | | ES 3014883 T3 | 28-04-2025 |
| | | JP 7290809 B2 | 13-06-2023 |
| | | JP 7334368 B2 | 28-08-2023 |
| | | JP 7547510 B2 | 09-09-2024 |
| | | JP 7639026 B2 | 04-03-2025 |
| | | JP 2023116564 A | 22-08-2023 |
| | | JP 2023175687 A | 12-12-2023 |
| | | JP 2024167317 A | 03-12-2024 |
| | | JP 2025081515 A | 27-05-2025 |
| | | JP WO2022138965 A1 | 30-06-2022 |
| | | JP WO2022138966 A1 | 30-06-2022 |
| | | JP WO2022138967 A1 | 30-06-2022 |
| | | JP WO2022138968 A1 | 30-06-2022 |
| | | KR 20230052949 A | 20-04-2023 |
| | | KR 20230052950 A | 20-04-2023 |
| | | KR 20230116835 A | 04-08-2023 |
| | | KR 20230118115 A | 10-08-2023 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 25 15 2867

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

09-07-2025

| Im Recherchenbericht angeführtes Patentdokument | Datum der Veröffentlichung | Mitglied(er) der Patentfamilie | Datum der Veröffentlichung |
|---|---|---|---|
| | | KR 20250044801 A | 01-04-2025 |
| | | US 2023227717 A1 | 20-07-2023 |
| | | US 2023340318 A1 | 26-10-2023 |
| | | US 2024059959 A1 | 22-02-2024 |
| | | US 2024103200 A1 | 28-03-2024 |
| | | WO 2022138965 A1 | 30-06-2022 |
| | | WO 2022138966 A1 | 30-06-2022 |
| | | WO 2022138967 A1 | 30-06-2022 |
| | | WO 2022138968 A1 | 30-06-2022 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 4240797 A
- EP 3807258 A
- EP 1214311 A